# FASCICULE DE BREVET EUROPEEN

(11) **EP 0 673 880 B1**
(45) Date de publication et mention de la délivrance du brevet: **15.10.1997**
(21) Numéro de dépôt: 95420040.8
(22) Date de dépôt: 20.02.1995
(51) Int. Cl.: C01B 33/02, C07F 7/16

(54) **Silicium métallurgique à microstructure contrôlée pour la préparation des halogénosilanes**
Metallurgisches Silizium mit einer kontrollierten Mikrostruktur für die Herstellung von Halogensilanen
Controlled microstructure metallurgical silicon for the preparation of halosilanes

(30) Priorité: 25.02.1994 FR 9402487
(43) Date de publication de la demande: 27.09.1995
(73) Titulaire: PECHINEY ELECTROMETALLURGIE, 92400 Courbevoie (FR)
(72) Inventeur: Margaria, Thomas, F-74190 Le Fayet (FR)
(74) Mandataire: Mougeot, Jean-Claude

(56) Documents cités:
- EP-A- 0 350 683
- EP-A- 0 372 918
- DE-A- 4 037 021

## Description

### DOMAINE TECHNIQUE

L'invention concerne une qualité particulière de silicium métallurgique à microstructure contrôlée, en particulier au niveau de la répartition des composés intermétalliques dus aux éléments mineurs présents dans le silicium.

Cette qualité est particulièrement bien adaptée à la réaction de synthèse des alkyl ou aryl halogénosilanes.

### ART ANTERIEUR

La synthèse des alkyl ou aryl halogénosilanes par réaction, entre 250 et 350°C, d'un hydrocarbure halogéné sur du silicium en présence d'un catalyseur à base de cuivre est connue depuis le brevet US 2380995 délivré le 7/08/1945 à ROCHOW.

Cette réaction, appelée réaction de ROCHOW, a atteint un développement industriel important, étant en particulier à la base de toute l'industrie des silicones. Elle se pratique en général avec le chlorure de méthyle, CH3Cl, et conduit à un mélange de différents méthylchlorosilanes, tels que le monométhyltrichlorosilane et le diméthyldichlorosilane. Ce dernier produit étant le plus recherché, on conduit la réaction de manière à ce que la proportion de ce produit soit maximale dans le mélange de silanes obtenu, cette proportion étant appelée sélectivité de la réaction. Par ailleurs, il est important de produire la quantité maximale de silanes par unité de temps, la valeur de ce flux pondéral étant appelée réactivité. Depuis le brevet initial de ROCHOW, de nombreuses recherches ont été consacrées à l'amélioration de ces deux paramètres en agissant sur la technologie du procédé, les catalyseurs et la composition chimique du silicium, celui-ci étant un produit industriel contenant un certain nombre d'éléments mineurs.

En effet, pour des raisons économiques, le silicium utilisé dans la réaction de ROCHOW est le silicium métallurgique, produit par carboréduction de la silice dans un four électrique, puis affiné pour régler le taux de ses principaux éléments mineurs et solidifié, soit sous forme de lingots, soit sous forme de granulés, ces produits étant ensuite réduits en poudre par broyage.

Ce silicium métallurgique contient un certain nombre d'éléments mineurs principaux, essentiellement calcium, aluminium et fer, qui sont présents chacun à des taux compris entre 0,01 et 1%, taux réglés au cours du processus d'affinage pour satisfaire les spécifications requises par le marché. Il contient également des éléments mineurs secondaires apportés par les matières premières, en quantité totale généralement comprise entre 10 et 500 ppm, et qui sont des métalloïdes (P, B, S, C) ou des métaux (Ti, Cu, Mg, Mn, Ni, V, Zr).

Ces éléments mineurs se retrouvent sous la forme de composés intermétalliques, ceux formés par les éléments principaux pouvant être binaires (FeSi2, CaSi2), ternaires (Fe5Al8Si7, CaAl2Si2, FeSi2Al3) ou quaternaires (Fe4Al6CaSi8). Ces différents composés intermétalliques sont décrits dans une publication de la demanderesse: T.MARGARIA, J.C.ANGLEZIO, C.SERVANT "Intermetallic Compounds in Metallurgical Silicon" INFACON 6 Proceedings of the 6th International Ferroalloys Congress Cape Town, vol. 1, SAIMM Johannesburgh, 1992, pp. 209-214. Cette publication met en évidence les conditions de formation des intermétalliques, en particulier en fonction de la vitesse de solidification du silicium, et l'influence de certains composés sur la sélectivité et la réactivité de la réaction de ROCHOW. D'autres travaux ont également montré le rôle de la composition chimique des intermétalliques. Ainsi, la demande de brevet allemand DE 4037021 de la société ELKEM revendique un silicium destiné à la réaction de ROCHOW dans lequel les impuretés sont sous la forme de composés FeAl3Si2 et Fe4Si6Al4Ca.Par ailleurs, on a proposé d'améliorer la réactivité dans la réaction de ROCHOW en jouant sur la granulométrie et le mode d'obtention de la poudre de silicium.

Ainsi, les brevets européens EP 350683 de BAYER et EP 372918 d'ELKEM prétendent que l'utilisation de silicium atomisé permet une augmentation sensible de la réactivité. Cependant, l'atomisation n'est pas utilisée industriellement pour fabriquer du silicium destiné à la synthèse des silanes.

### BUT DE L'INVENTION

Le but de l'invention est de fournir un silicium métallurgique conduisant à une réactivité élevée dans la réaction de ROCHOW en contrôlant la microstructure du silicium produit.

### OBJET DE L'INVENTION

L'invention a pour objet un silicium métallurgique à microstructure contrôlée pour la fabrication d'halogénosilanes, caractérisé en ce que, lorsqu'une image de la microstructure obtenue au microscope électronique à balayage est traitée par binarisation entre une matrice silicium et une phase intermétallique puis dilatation des zones correspondant à la phase intermétallique avec une extension autour de ces zones de 10 microns, le rapport S/S₀ des fractions surfaciques de la zone intermétallique entre l'image dilatée et l'image avant dilatation est compris entre 20 et 40.

L'invention concerne également une méthode de caractérisation du silicium pour la préparation des halogénosilanes consistant à:
- réaliser une image de la microstructure au microscope électronique à balayage, en mode électrons rétrodiffusés et contraste de numéro atomique moyen,
- traiter l'image obtenue à l'aide d'un logiciel d'analyse d'images par lissage des niveaux de gris, binarisation entre une matrice silicium et une phase intermétallique et dilatation des zones correspondant à la phase intermétallique,
- comparer les fractions surfaciques des intermétalliques avant et après une dilatation définie autour des zones correspondant à la phase intermétallique.

La demanderesse a, en effet, découvert, de manière inattendue, que la technique de dilatation utilisée en analyse d'image pouvait permettre de simuler, sur une certaine plage, le comportement du silicium dans la réaction de ROCHOW, et, plus particulièrement, sa réactivité.

Elle émet l'hypothèse, pour tenter d'expliquer cette relation, que, plus les composés intermétalliques sont dispersés, plus ils constituent de sites d'attaque de la réaction et plus celle-ci a tendance à se propager rapidement dans toute la masse du silicium. Or, plus les composés intermétalliques sont dispersés, plus leur fraction surfacique après dilatation en analyse d'image sera importante. Il semble cependant qu'à partir d'un certain niveau, l'augmentation de la dispersion va à l'encontre de la réactivité et qu'il existe donc une plage optimale de dispersion favorisant la réactivité.

### DESCRIPTION DE L'INVENTION

La méthode de caractérisation selon l'invention consiste d'abord à préparer des échantillons du silicium métallurgique dont on veut contrôler la microstructure. Cette préparation consiste en un enrobage dans une résine conductrice incolore à base de cuivre, un prépolissage au papier de carbure de silicium, une imprégnation sous vide et un polissage final au feutre diamanté. Ces échantillons sont analysés au microscope électronique à balayage, en mode électrons rétrodiffusés (BSE) et contraste de numéro atomique moyen. Les plages de composés intermétalliques apparaissent en blanc par rapport à la matrice en silicium. En réglant la brillance, on se place à un niveau de gris moyen bien défini et reproductible, de manière à rester toujours dans les mêmes conditions.

On peut travailler à grandissement relativement faible (par exemple 200), ce qui autorise un champ d'analyse important (500 x 500 microns).

On va alors traiter l'image obtenue au MEB par un logiciel d'analyse d'images. La première étape va consister en un lissage de l'image en niveaux de gris pour éliminer les imperfections dues à la prise d'information. On passe ensuite à la binarisation de l'image, qui va permettre de séparer les phases silicium et intermétalliques. Pour bien prendre en compte les phases très fines, on utilise une résolution de 1024 x 1024 points par image. On mesure alors la fraction surfacique brute occupée par les intermétalliques dans le champ d'analyse considéré. On effectue cette mesure sur un nombre de champs tel que cette fraction surfacique cumulée tende à se stabiliser autour d'une valeur moyenne.

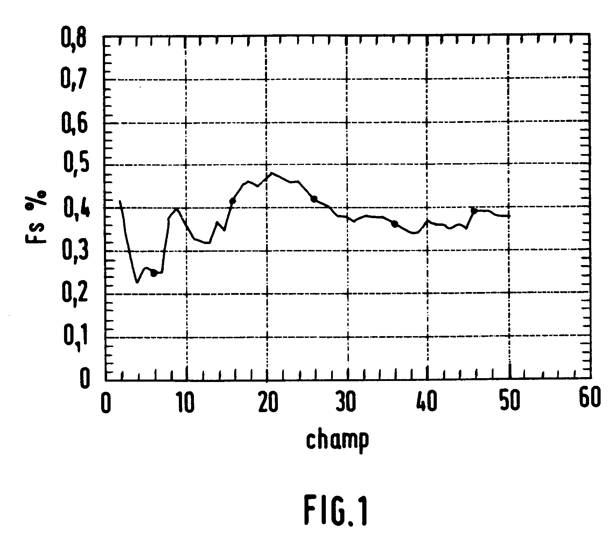

La figure 1 montre un exemple où la fraction surfacique cumulée tend à se stabiliser au delà de 30 champs. Dans un tel cas, on fera des mesures sur 50 champs.

On procède alors à la dilatation des zones correspondant aux composés intermétalliques, par pas successifs de 1 à 10 correspondant chacun à une extension de 1,8 micron à l'extérieur de ces zones, et on mesure, à chaque pas de dilatation, la fraction surfacique de la phase intermétallique.

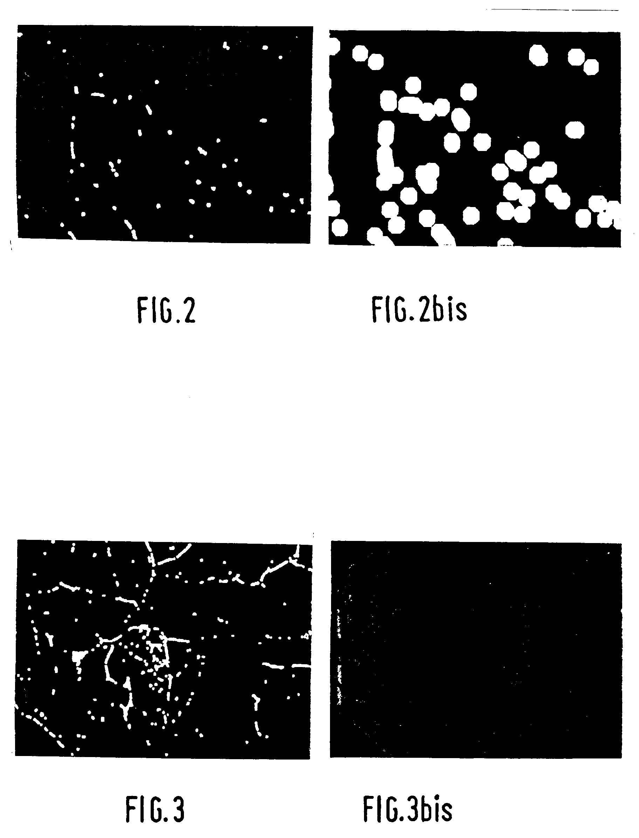

Les figures 2 et 2 bis représentent respectivement les images binaires, avant et après une dilatation de pas 9, pour un échantillon de silicium dans lequel les composés intermétalliques sont peu dispersés et au contraire agglomérés en plages assez importantes.

Les figures 3 et 3 bis représentent dans les mêmes conditions les images binaires correspondant à un échantillon de silicium selon l'invention avec des phases intermétalliques bien dispersées.

On constate qu'en partant d'une fraction surfacique brute pratiquement identique dans les deux cas, la fraction surfacique blanche, correspondant aux intermétalliques, avec un taux de dilatation élevé, est très largement supérieure dans le second cas.

Pour obtenir une microstructure conforme à l'invention, il est nécessaire que le silicium se solidifie avec une vitesse de refroidissement suffisante, comprise de préférence entre 400 et 600°C/s, bien que ce ne soit pas le seul paramètre qui agisse sur la dispersion des composés intermétalliques. Il a été constaté que, parmi les différentes techniques possibles de solidification, la granulation assistée par jet d'eau permet le plus souvent d'obtenir la microstructure recherchée.

Dans cette technique, on utilise, comme pour la granulation classique, une tête de granulation placée au dessus d'une cuve contenant un volume d'eau dont la surface est située entre 30 et 60 cm au dessous de la tête.

Le métal liquide versé sur la tête de granulation se disperse en une nappe liquide à peu près continue qui naturellement se disperse en goutelettes avant d'atteindre la surface de l'eau de la cuve.

En projetant sur la nappe secondaire de silicium liquide venant de la tête de granulation une pluie d'eau sous pression, on obtient une dispersion plus rapide et des goutelettes plus fines, qui se refroidissent ensuite beaucoup plus vite.

Ce dispositif permet d'atteindre une vitesse de refroidissement d'environ 500°C/s favorable à l'obtention de la microstructure selon l'invention. De plus, on évite ainsi les explosions qui risquent de se produire dans une installation classique de granulation, même dimensionnée spécialement pour traiter du silicium.

Inversement, la solidification sous forme de lingots, que ce soit des lingots coulés individuellement, d'épaisseur comprise entre 10 et 20 cm, soit des lingots coulés sur une chaîne de lingotières, d'épaisseur 4 à 5 cm, avec éventuellement un refroidissement de la chaîne accéléré par pulvérisation d'eau, ne permet pas d'obtenir la microstructure recherchée dans la totalité du produit.

Par ailleurs, la microstructure correspondant à la solidification par atomisation, bien que correspondant à une vitesse de refroidissement élevée et conduisant dans le test de caractérisation selon l'invention, à un rapport élevé des fractions surfaciques après et avant dilatation de la phase intermétallique, entraîne, de manière surprenante, une diminution de la réactivité.

Ceci montre que la méthode de caractérisation de l'invention permet de délimiter une plage optimale de microstructure autorisant un niveau élevé de réactivité pour la synthèse des chlorosilanes.

### EXEMPLE

On a produit du silicium métallurgique dont la composition chimique a été adaptée aux spécifications des producteurs de silicones et contenant 0,25% en poids de fer, 0,1% d'aluminium et 0,04% de calcium comme éléments mineurs principaux.

Une partie de ce silicium liquide a été coulée en lingots d'épaisseur 10 cm sur une installation classique de lingotage, une autre partie a été coulée sur une chaîne de lingotières refroidie à l'air conduisant à des lingots d'épaisseur 5 cm, une autre partie sur la même chaine refroidie par eau pulvérisée, tandis qu'une autre partie a été granulée à l'eau, avec un diamètre des billes de silicium ne dépassant pas 10 mm, une autre partie granulée avec le procédé de granulation assistée par jet d'eau décrit précédemment, et enfin une dernière partie a été atomisée en particules de taille comprise entre 50 et 250 microns.

Des échantillons des six produits ont été préparés et ont été soumis à la méthode de caractérisation selon l'invention, avec un traitement d'images par dilatation effectué sur 30 champs d'analyse. On a mesuré respectivement, pour les six échantillons, la fraction surfacique moyenne de la phase intermétallique avant dilatation et la fraction surfacique moyenne de cette même phase après 6 pas de dilatation de 1,8 micron, soit une extension de 10,8 microns.

Les rapports de fractions surfaciques obtenus sont les suivants:

| | |
|---|---|
| lingots coulés individuellement: | 3 |
| lingots coulés sur chaîne non refroidie: | 8 |
| lingots coulés sur chaîne refroidie: | 12 |
| granulation à l'eau classique: | 17 |
| granulation assistée par jet d'eau: | 31 |
| atomisation: | 48 |

Des essais de chlorométhylation montrent que le silicium granulé par la méthode de granulation assistée par jet d'eau présente une réactivité supérieure d'au moins 10 % à celle du silicium solidifié de toutes les autres manières

## Revendications

1. Silicium métallurgique à microstructure contrôlée pour la préparation d'halogénosilanes, caractérisé en ce que, lorsqu'une image de la microstructure obtenue au microscope électronique à balayage est traitée par binarisation entre une phase intermétallique et une matrice silicium, puis dilatation des zones correspondant à la phase intermétallique avec une extension autour de ces zones de 10 microns, le rapport S/S₀ des fractions surfaciques de la phase intermétallique entre l'image dilatée et l'image avant dilatation est compris entre 20 et 40.

2. Méthode de caractérisation du silicium métallurgique selon la revendication n°1 , caractérisée en ce que:
- on réalise une image de la microstructure du silicium au microscope électronique à balayage, en mode électrons rétrodiffusés et contraste de numéro atomique moyen,
- on traite l'image obtenue par un logiciel d'analyse d'images comportant un lissage des niveaux de gris, une binarisation entre une phase intermétallique et une matrice silicium, puis dilatation des zones correspondant à la phase intermétallique,
- on compare les fractions surfaciques de la phase intermétallique avant et après une dilatation définie autour des zones correspondant à la phase intermétallique.

3. Méthode selon la revendication 2, caractérisée en ce qu' on réalise une image par microscopie électronique sur un nombre suffisant de champs d'analyse de manière que la fraction surfacique cumulée de la phase intermétallique d'un échantillon tende à se stabiliser autour d'une valeur moyenne.

4. Procédé de fabrication de silicium métallurgique selon la revendication 1, caractérisé en ce que ce silicium est obtenu par refroidissement, à une vitesse comprise entre 400 et 600°C/s, de goutelettes de taille inférieure à 10 mm.

5. Procédé selon la revendication 4, caractérisé en ce que, pour disperser le silicium en goutelettes et le refroidir, on le soumet à un jet d'eau tombant dans un récipient rempli d'eau.

## Claims

1. Metallurgical silicon with controlled microstructure for the preparation of halogenosilanes, characterized in that when an image of the microstructure obtained with the scanning electron microscope is processed by binarization between an intermetallic phase and a silicon matrix, then expansion with an extension of 10 µm around these zones, the ratio S/S₀ of the surface fractions of the intermetallic phase between the expanded image and the image before expansion is between 20 and 40.

2. A method of characterizing metallurgical silicon according to claim 1, characterized in that:
- an image of the silicon microstructure is made with the scanning electron microscope, in the back scattering electron mode, and the mean atomic number is contrasted;
- the image obtained is processed by image analysis software including smoothing of the grey levels, binarization between an intermetallic phase and a silicon matrix, then expansion of the zones corresponding to the intermetallic phase;
- the surface fractions of the intermetallic phase before and after a defined expansion around zones corresponding to the intermetallic phase are compared.

3. The method of claim 2, characterized in that an electron microscope image is made of a sufficient number of analysis fields that the cumulative surface fraction of the intermetallic phase of a specimen tends to stabilize about a mean value.

4. A process of producing metallurgical silicon of claim 1, characterized in that this silicon is obtained by chilling, at a rate of between 400 and 600° C/s, of droplets smaller in size than 10 mm.

5. The process of claim 4, characterized in that to disperse the silicon into droplets and chill it, it is subjected to a jet of water that drops into a container filled with water.

## Patentansprüche

1. Hüttensilizium mit kontrollierter Feinstruktur für die Herstellung Von Halogensilanen, dadurch gekennzeichnet, daß bei Verarbeitung eines mit Hilfe des Rasterelektronenmikroskops erzeugten Bildes der Feinstruktur durch Binarisierung zwischen einer intermetallischen Phase und einer Siliziummatrize und anschließender Dehnung der der intermetallischen Phase entsprechenden Bereiche mit einer Ausdehnung von 10 Mikrometer um diese Bereich herum das Verhältnis S/Sₒ der flächenbezogenen Fraktionen der intermetallischen Phase zwischen dem Bild nach der Dehnung und dem Bild vor der Dehnung 20 bis 40 beträgt.

2. Kennzeichnungsverfahren für das Hüttensilizium nach Anspruch 1, dadurch gekennzeichnet, daß
- ein Bild der Feinstruktur des Siliziums mit Hilfe des Rasterelektronenmikroskops im Modus Elektronenrückstreuung und mittleres Ordnungszahlverhältnis erzeugt wird,
- das erhaltene Bild mit einem Bildanalyseprogramm verarbeitet wird, welches eine Glättung der Graustufen, eine Binarisierung zwischen einer intermetallischen Phase und einer Siliziummatrize sowie eine anschließende Dehnung der der intermetallischen Phase entsprechenden Bereiche enthält,
- die flächenbezogenen Fraktionen der intermetallischen Phase vor und nach einer definierten Ausdehung um die der intermetallischen Phase entsprechenden Bereiche herum verglichen werden.

3. Verfahren nach Anspruch 2, dadurch gekennzeichnet, daß ein Bild durch Elektronenmikroskopie auf einer ausreichenden Zahl von Analysefeldern erseugt wird, so daß die flächenbezogene summierte Fraktion der intermetallischen Phase einer Probe dazu neigt, sich um einen Mittelwert herum zu stabilisieren.

4. Verfahren zur Herstellung von Hüttensilizium nach Anspruch 1, dadurch gekennzeichnet, daß dieses Silizium durch Kühlung von weniger als 10 mm großen Tröpfchen bei einer Geschwindigkeit von 400 bis 600°C/s gewonnen wird.

5. Verfahren nach Anspruch 4, dadurch gekennzeichnet, daß das Silizium zur Tröpfchendispersion und Kühlung einem Wasserstrahl ausgesetzt wird, der in einen wassergefüllten Behälter fällt.
